# EUROPEAN PATENT SPECIFICATION

(11) **EP 4 418 096 B1**
(45) Date of publication and mention of the grant of the patent: **30.09.2026**
(21) Application number: 22883694.6
(22) Date of filing: 11.04.2022
(51) Int. Cl.: G06F 3/06, G06F 30/3308, G06N 99/00, G06F 30/398, G06F 115/10

(54) **STORAGE DEVICE SYSTEM FOR QUANTUM CIRCUIT SIMULATION**
SPEICHERVORRICHTUNGSSYSTEM ZUR QUANTENSCHALTUNGSSIMULATION
SYSTÈME DE DISPOSITIF DE STOCKAGE POUR SIMULATION DE CIRCUIT QUANTIQUE

(30) Priority: 21.10.2021 KR 20210141159; 07.04.2022 KR 20220043557
(43) Date of publication of application: 21.08.2024
(73) Proprietor: Seoul National University R&DB Foundation, Seoul 08826 (KR)
(72) Inventor: LEE, Jae Jin, Gwanak-gu Seoul 08826 (KR); PARK, Dae Young, Gwanak-gu Seoul 08826 (KR); KIM, Hee Hoon, Gwanak-gu Seoul 08826 (KR); KIM, Jin Pyo, Gwanak-gu Seoul 08826 (KR)
(74) Representative: Manitz Finsterwald Patent- und Rechtsanwaltspartnerschaft mbB
(86) International application number: PCT/KR2022/005229
(87) International publication number: WO 2023/068463

(56) References cited:
- WO-A2-2007/062424
- KR-A- 20090 102 789
- KR-A- 20100 120 539
- KR-A- 20120 089 214
- US-A1- 2020 218 787
- US-B1- 10 671 550
- BANG SOOHO: "Do You Know RAID··· Efficient HDD Manual", MANZLAB, 14 September 2021 (2021-09-14), XP093057708, Retrieved from the Internet <URL:https://www.manzlab.com/news/articleView.html?idxno=15843> [retrieved on 20230626]

## Description

### BACKGROUND

The present disclosure relates to a storage system, and more particularly, to a storage system for executing an algorithm for a quantum circuit by using a classical computer.

Quantum computing is a computing paradigm that uses a quantum mechanical phenomenon, such as quantum superposition and entanglement. A minimum unit of the quantum computing is a qubit which may represent a superposed state of 0 and 1 unlike a bit of the classical computing. A computational model of the quantum computing is called a quantum circuit, and the quantum circuit is a set of N qubits and a series of quantum gates that act on the qubits.

In order for a classical computer to represent quantum information, an exponentially increasing memory is required. A state expressed by N qubits may be represented by a total of 2n amplitudes. Each amplitude is expressed as a complex number and may generally be represented by 16 bytes of memory. Therefore, to simulate a quantum circuit including N qubits, a storage space of 2^{(N+4)} bytes is required. Exponentially increasing memory requirements are the biggest barrier to simulation of a quantum circuit.

The existing quantum circuit simulation technology uses a supercomputer with a scale of thousands to tens of thousands of nodes to handle enormous memory requirements. However, the technology currently has difficulty in simulating a quantum circuit of 50 qubits or more, even when the largest supercomputer is used. In addition, using the supercomputer has the disadvantage of requiring enormous costs and making it difficult for ordinary users to even access the supercomputer.

US 2020/218787 A1 discloses a computer-implemented method performed by one or more computing nodes for simulating a gate operation of quantum computing. In the method, a problem having 2n size is divided into a plurality of sub-problems, each of which has 2m size. A first index table for storing a first identifier is prepared for each sub-problem. In response to a request for a gate operation involving exchanges of quantum amplitudes that are designated by a target qubit at least in part, a determination is made as to whether a first condition regarding at least the target qubit and m is satisfied or not. In response to the first condition being satisfied, corresponding first identifiers in the first index table are swapped in place of the exchanges of the quantum amplitudes.

### SUMMARY

The invention is defined by the appended claims.

Embodiments may provide an expanded storage system that performs large-scale operations and uses a storage device, which is cheaper and has a larger storage capacity than a memory to perform simulation of a quantum circuit, such as a hard disk drive (HDD), a solid state drive (SSD), or nonvolatile memory express (NVMe).

Embodiments may provide a storage system including multiple high-capacity storage devices that meet exponentially increasing memory requirements for simulation of a quantum circuit without using a supercomputer.

Other aspects, features, and advantages other than above description will become apparent from following drawings, claims, and detailed description of the present disclosure.

According to an aspect of embodiments, a storage system includes multiple storage devices, wherein the multiple storage devices may be connected to a host device through a redundant array of independent disks (RAID) expansion card and may read data consecutively stored in a first storage device among the multiple storage devices to a main memory with a single access to the first storage device in response to a data read request for an operation in the main memory of the host device.

According to another aspect of embodiments, an operation method using multiple storage devices may include requesting, by a host device, read of data for an operation in a main memory, and reading data consecutively stored in a first storage device among the multiple storage devices to the main memory with a single access to the first storage device, wherein the multiple storage devices may be connected to the host device through a redundant array of independent disks (RAID) expansion card.

### BRIEF DESCRIPTION OF THE DRAWINGS

Embodiments of the inventive concept will be more clearly understood from the following detailed description taken in conjunction with the accompanying drawings in which:
FIG. 1 is a block diagram of an electronic device including a storage system, according to an embodiment;
FIG. 2 is an example of an architecture of a storage system according to an embodiment;
FIG. 3A is an implementation example of a storage system using a hard disk drive (HDD), according to an embodiment;
FIG. 3B is an implementation example of a storage system using a solid state drive (SSD), according to an embodiment;
FIG. 3C is an implementation example of a storage system using nonvolatile memory express (NVMe), according to an embodiment; and
FIG. 4 is a flowchart of a method of simulating a quantum circuit, according to an embodiment.

### DETAILED DESCRIPTION OF THE EMBODIMENTS

Hereinafter, embodiments will be described in detail with reference to the attached drawings. However, the scope of rights is not limited by the embodiments. The same reference numerals in each drawing indicate the same members.

Terms used in the description below have been selected to be general and universal in the related technical field, but there may be other terms depending on technological developments and/or changes, preferences of customary technicians, and so on. Accordingly, the terms used in the description below should not be understood as limiting the technical idea and should be understood as illustrative terms for describing embodiments.

Also, in certain cases, there are terms randomly selected by the applicant, and in this case, the detailed meaning will be described in the relevant description. Therefore, the terms used in the description below should be understood based on the meaning of the terms and the overall content of the specification, not just the names of the terms.

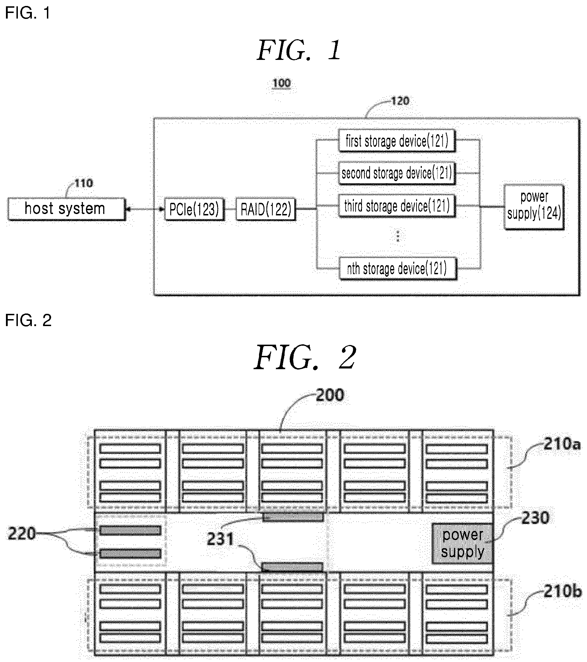

FIG. 1 is a block diagram of an electronic device 100 including a storage system 120, according to an embodiment. The electronic device 100 may include a host system 110 and the storage system 120. The host system 110 performs an actual operation and includes different systems including a central processing unit (CPU), a main memory, and a graphics processing unit (GPU). The storage system 120 includes multiple storage devices 121, and the multiple storage devices include, for example, a hard disk drive (HDD), a solid state drive (SSD), nonvolatile memory express (NVMe), and so on. The multiple storage devices 121 are connected to a power supply 124. The storage system 120 may be connected to the host system 110 through a redundant array of independent disks (RAID) card 122 and a peripheral component interconnect express (PCle) slot 123. The RAID card 122 may be used to connect multiple arrays of independent disks to a host CPU and mainly operate by being connected to the PCIe slot 123. The PCIe slot 123 refers to a serial interface for input and output.

The electronic device 100 may read, from the storage system 120, data corresponding to a partial execution unit obtained by partitioning a large-scale operation into executable units in a main memory and may write operation result data to the storage system 120 after a partial operation. In one embodiment, the electronic device 100 may partition a quantum circuit into several sub-circuits through a sub-circuit partitioning process to simulate the quantum circuit and sequentially simulate all sub-circuits in units of sub-circuits. In one embodiment, the electronic device 100 may read, for example, learning data related to a convolution operation, from the storage system 120, in units executable in the main memory to execute a deep learning algorithm and may write operation result data to the storage system 120 after each convolution operation.

FIG. 2 is an example of an architecture of the storage system 200 according to an embodiment.

The multiple storage devices 121 may be coupled to modules 210a and 210b. The storage system 200 may have a structure including five separate modules 210a and 210b. The modules 210a and 210b may each include four storage devices (for example, a HDD, a SSD, and NVMe), and the architecture illustrated in FIG. 2 may include 40 storage devices. A storage device attached to each of the modules 210a and 210b may support an appropriate interface. For example, an HDD may be attached to a device that supports a small astronomy satellite-3 (SAS3) or serial advanced technology attachment-3 (SATA3). An SSD attached to each module has to support SAS3 or STAT3. An NVMe attached to each module has to support an M.2 or U.2 interface. Multiple storage devices may be mixed in the storage system 200. However, when storage devices of the same type are attached to the storage system 200, the best performance may be achieved.

A reference numeral 220 indicates a PCIe expansion card and a RAID expansion card connected thereto. A PCIe expansion card 220 operates by receiving the power provided from a power supply 230. A RAID expansion card 220 may support SAS3 and include at least one external port and at least five internal ports. The multiple storage devices 121 may be connected to a RAID card or another storage system.

Panels 231 to which a direct current (DC) converter is attached are provided to supply power from the power supply 230 to the multiple storage devices 121. The panels 231 may each be attached to four DC converters, each converting 12 V to 5 V . The storage system 200 includes the power supply 230. The power supply 230 supplies power to the multiple storage devices 210a and 210b and the panels 231 to which DC converters are respectively attached.

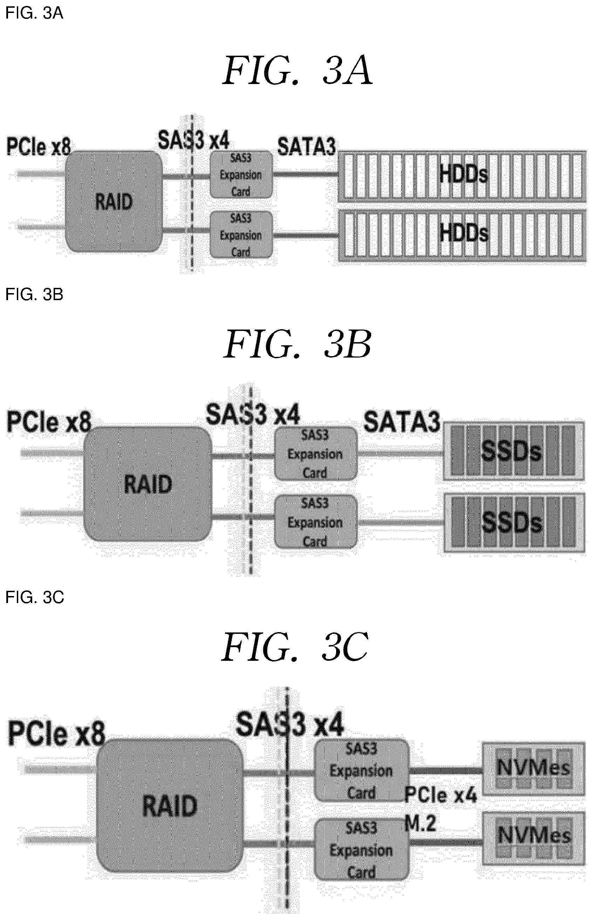

FIG. 3A is an implementation example of a storage system using an HDD, according to an embodiment.

The storage system 120 includes two SAS3 expansion cards and 40 SATA3 HDDs. In this case, the SAS3 expansion cards may each have five SFF8643 internal ports and more, and the SFF8643 internal ports may each be connected to four HDDs through SFF8643-4xSATA3 cables. As a result, each of the two SAS3 expansion cards may be connected to 20 HDDs through five ports, and the two SAS3 expansion cards may be connected to a total of 40 HDDs. In order for the storage system 120 to be connected to the host system 110, a RAID card may be attached to PCle x8 lane.

The RAID card has two or more SFF8644 external ports. The RAID card is connected to the SAS3 expansion card through an SFF8644-SFF8644 cable. The RAID card may be directly and physically attached to the host system 110, and the SAS3 expansion card may be directly and physically connected to multiple storage devices.

The storage system 120 of FIG. 3A is designed to provide sufficient performance to the host system 110 by calculating a bandwidth of each communication interface. A bandwidth of a SATA3 HDD is ~220 MB/s, a bandwidth of a SATA3 connection is 768 MB/s, and a bandwidth of a SAS3x4 (for example, SFF8643 or SFF8644) connection is 6 GB/s. Therefore, a connection of one SATA3 provides a sufficient bandwidth for one HDD. Also, a connection of one SAS3x4 provides a sufficient bandwidth for 20 HDDs. Therefore, connections of two SAS3x4 provide a sufficient bandwidth for 40 HDDs.

FIG. 3B is an implementation example of a storage system using an SSD, according to an embodiment.

The storage system 120 includes two SAS3 expansion cards and 16 SSDs. The two SAS3 expansion cards may each include two or more SFF8643 internal ports, and each port may be connected to four SSDs through SFF8643-4xSATA3 cables. As a result, each of the two SAS3 expansion cards may be connected to eight SSDs through two ports, and the two SAS3 expansion cards may be connect to a total of 16 SSDs. A connection between the host system 110 and the storage system 120 is the same as in the case of FIG. 3A (SFF8644-SFF8644).

In the embodiment of FIG. 3B, a bandwidth of the SSD is ~550 MB/s, and SAS3x4 of 6 GB/s provides a sufficient bandwidth for eight SSDs. Finally, connections of two SAS3x4 provide a sufficient bandwidth for 16 SSDs.

FIG. 3C is an implementation example of a storage system using NVMe, according to an embodiment.

The storage system 120 includes two SAS3 expansion cards and eight M.2 NVMes. Each of the two SAS3 expansion cards includes four or more SFF8643 internal ports, and each port may be connected to one NVMe through an SFF8643-M.2 cable. As a result, the two SAS3 expansion cards may each be connected to four NVMes through four ports, and the two SAS3 expansion cards may be connected to a total of eight NVMes. A connection between the host system 110 and the storage system 120 is the same as in the case of FIG. 3A (SFF8644-SFF8644).

However, unlike the embodiment of FIG. 3A including HDDs, a performance bottleneck occurs in a bandwidth of the connection of SAS3 x4 connecting a RAID card to the SAS3 expansion card in FIG. 3C. This is because a bandwidth of the latest NVMe device is ~6 GB/s, which is much higher than a bandwidth of an HDD. However, a RAID configuration may reduce the possibility of data loss due to failure of a storage device. Also, because NVMe has a much shorter lifespan than an HDD and the total size of write operations is limited, the RAID configuration has an advantage of using for a longer period of time by distributing the write operations. In various embodiments, an architecture may be designed by selecting an appropriate storage device depending on the purpose and functionality of a host system.

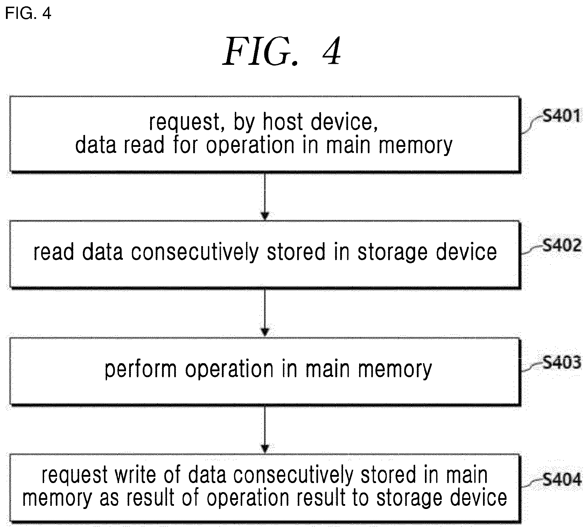

FIG. 4 is a flowchart of an operation method using multiple storage devices, according to an embodiment.

In step S401, a host device may request data read for operation in a main memory. In one embodiment, the host device may request probability amplitude data read for one or more sub-circuits stored in multiple storage devices to simulate a quantum circuit in one or more partitioned sub-circuit units.

In step S402, the probability amplitude data of each sub-circuit consecutively stored in one of the multiple storage devices may be read to the main memory with a single access to the storage device. The probability amplitude data of each sub-circuit is consecutively stored in one of the multiple storage devices, and the probability amplitude data may be read consecutively with a single access to the storage device according to a data request. During simulation (for example, a gate operation) for each sub-circuit, the host device does not require additional access to the storage device for execution of a corresponding sub-circuit.

In step S403, the host device may perform an operation in a main memory. In one embodiment, the host device may perform each simulation for one or more sub-circuits obtained by partitioning a quantum circuit, and a probability amplitude data value for the sub-circuit may be updated according to a quantum gate operation. In response to execution of a block permutation operation for each of sub-circuits which is performed by the host device, a storage device may change the layout of data of each sub-circuit. The host device according to an embodiment may convert a permutation operation for each of one or more sub-circuits into a first-stage in-memory permutation operation, a second-stage block permutation operation, and a third-stage in-memory permutation operation to sequentially perform the operations. In one embodiment, a main memory may change data layouts of the first-stage in-memory permutation operation and the third-stage in-memory permutation operation, and a storage device may change a data layout of the second-stage block permutation operation. By fixing a minimum unit of access operations for all storage devices to be relatively large by using the third-stage permutation operation, a bandwidth of the storage device may be utilized much better than performing a simple memory access operation. However, an additional memory operation is required for two in-memory permutation operations, which is an access to a memory and is much faster than an access to a storage device, and accordingly, when considering the total operation time, it is more efficient to apply a third-stage permutation operation.

In step S404, the host device may request write of the data consecutively stored in a main memory as a result of an operation result to the storage device. In one embodiment, the host device may consecutively write an updated value of probability amplitude data stored in the main memory to the storage device with only one access as a result of simulation of each sub-circuit of a quantum circuit.

In one embodiment, multiple storage devices may include any one type among an HDD, an SSD, and NVMe. That is, the multiple storage devices may include storage devices of one type as illustrated in FIGS. 3A to 3C. In another embodiment, the multiple storage devices may include one or more types of an HDD, an SSD, and NVMe. It is obvious to those skilled in the art that the multiple storage devices may be designed by using various devices in various embodiments without being limited to the HDD, SSD, or NVMe.

In one embodiment, a step of loading the probability amplitude data for a next sub-circuit of the first sub-circuit into a main memory while the host device performs an operation of the first sub-circuit among one or more sub-circuits may be further provided. Because the partitioned sub-circuits are simulated sequentially, the host device may know an exact position value of the probability amplitude data for a sub-circuit to be used next to a currently executing sub-circuit. Therefore, the host device may apply a prefetching technique to optimize the simulation. The host device may load the probability amplitude data for the second sub-circuit to be executed after the currently executing first sub-circuit into the main memory in advance, that is, during execution of the first sub-circuit.

A dynamic random access memory (DRAM) device used in the conventional technology 297 is more expensive than an HDD based on cost per gigabyte (GB), and even the world's most powerful supercomputer in 2021 may not perform simulation of a 50-qubit quantum circuit. However, according to embodiments of the present disclosure, in order to simulate a quantum circuit with a size of 50 qubits, a storage system may be configured with only 16 storage devices, for example, HDDs of 80x16 TB.

According to embodiments, even a storage system including only low-cost and high-capacity storage devices may perform large-scale operations, such as quantum circuit simulation and deep learning.

The embodiments described above may be implemented by hardware components, software components, and/or a combination of hardware components and software components. For example, the device, method, and components described in the embodiments may each be implemented by one or more general-purpose computers or special-purpose computers, such as a processor, a controller, an arithmetic logic unit (ALU), a digital signal processor, a microcontroller, a field programmable gate array (FPGA), a programmable logic unit (PLU), a microprocessor, or any other device that may execute and respond to instructions. A processing device may execute an operating system (OS) and one or more software applications that run on the operating system. Also, a processing device may also access, store, operate, process, and generate data in response to execution of software. For the sake of ease of understanding, a single processing device may be described as being used, but those skilled in the art will understand that a processing device includes multiple processing elements and/or multiple types of processing elements. For example, a processing device may include multiple processors or one processor and one controller. Also, other processing configurations, such as parallel processors, may be implemented.

Software may include a computer program, code, instructions, or a combination thereof, which may configure a processing device to operate as desired or may independently or collectively command the processing device. Software and/or data may be embodied permanently or temporarily in any type of a machine, component, a physical device, virtual equipment, a computer storage medium or device, and a signal wave to be transmitted to be interpreted by or to provide instructions or data to a processing device. Software may be distributed over networked computer systems and stored or executed in a distributed manner. Software and data may be stored in one or more computer-readable recording media.

The method according to the embodiment may be implemented in the form of program instructions that may be executed by various computer devices and may be recorded on a computer-readable medium. The computer-readable medium may include program instructions, data files, data structures, or a combination thereof. Program instructions recorded on a medium may be specially designed and configured for the embodiment or may be known and available to those skilled in the art of computer software. Computer-readable recording media include, for example, magnetic media such as hard disks, floppy disks, and magnetic tapes, optical media such as a compact disk-read only memory (CD-ROM) and a digital video disk_(DVD), magnetooptical media such as floptical disks, and hardware devices specifically configured to store and execute program instructions, such as read only memory (ROM), random access memory (RAM), and flash memory. Program instructions include, for example, machine language code that are generated by a compiler and a high-level language code that may be executed by a computer by using an interpreter and so on. The hardware devices described above may be configured to operate as one or more software modules to perform the operations of the embodiments, and vice versa.

As described above, although embodiments are described with limited examples and drawings, various modifications and changes may be made by those skilled in the art from the above description. For example, although the described technologies are performed in a different order from the described method, components of the described system, structure, device, circuit, and so on are coupled or combined in a different form from the described method, and/or the components are replaced or substituted with other components or equivalents, appropriate results may be achieved.

## Claims

1. A storage system for simulation of a quantum circuit, comprising:
multiple storage devices, wherein the multiple storage devices are connected to a host device through a redundant array of independent disks (RAID) expansion card,
the storage system being configured such that data stored in any of the multiple storage devices are readable to a main memory of the host device and writable from the main memory to the storage devices in response to a data access request,
wherein:
each of the storage devices stores probability amplitude data in units of sub-circuits obtained by partitioning a quantum circuit;
in response to a data read request for an operation in a main memory of the host device, probability amplitude data consecutively stored in a first storage device among the multiple storage devices are read to the main memory with a single access to the first storage device; and
in response to a data write request of the host device, operation result data consecutively stored in the main memory are consecutively written to a second storage device among the multiple storage devices with a single access to the second storage device;
wherein the operation result data include results obtained by the host device performing quantum circuit simulation on the probability amplitude data in units of the sub-circuits; and
wherein, while the host device simulates a first sub-circuit among the one or more sub-circuits, probability amplitude data for a next sub-circuit of the first sub-circuit are loaded into the main memory.

2. The storage system of claim 1, wherein
the multiple storage devices include storage devices of one type among a hard disk drive (HDD), a solid state drive (SSD), and nonvolatile memory express (NVMe).

3. The storage system of claim 1, wherein
the multiple storage devices include storage devices of one or more types among a hard disk drive, a solid state drive, and nonvolatile memory express.

4. The storage system of claim 1, wherein
the multiple storage devices change a layout of data of each of the sub-circuits in response to a block permutation operation which is performed by the host device for each of the sub-circuits.

5. The storage system of claim 1, wherein
the processor causes the multiple storage devices to be connected to another storage system through the redundant array of independent disks (RAID) expansion card.

6. The storage system of claim 1, wherein
a bandwidth of the storage system is determined according to a number of SAS3 expansion cards connected to the multiple storage devices.

7. An operation method using multiple storage devices, the operation method comprising:
requesting, by a host device, a data read from the storage devices for an operation in a main memory, wherein each of the storage devices stores probability amplitude data in units of sub-circuits obtained by partitioning a quantum circuit,
reading probability amplitude data consecutively stored in a first storage device among the multiple storage devices to the main memory with a single access to the first storage device;
performing, by the host device, quantum circuit simulation on the probability amplitude data in units of the sub-circuits and outputting operation result data; and
writing, by the host device, the operation result data consecutively stored in the main memory to a second storage device among the plurality of storage devices with a single access to the second storage device;
wherein, while the host device simulates a first sub-circuit among the one or more sub-circuits, probability amplitude data for a next sub-circuit of the first sub-circuit are loaded into the main memory;
wherein the multiple storage devices are connected to the host device through a redundant array of independent disks (RAID) expansion card.

8. The operation method of claim 7, wherein
the multiple storage devices include storage devices of one type among a hard disk drive (HDD), a solid state drive (SSD), and nonvolatile memory express (NVMe).

9. The operation method of claim 7, wherein
the multiple storage devices include storage devices of one or more types among a hard disk drive, a solid state drive, and nonvolatile memory express.

10. The operation method of claim 7, wherein
the multiple storage devices are connected to each other through the redundant array of independent disks (RAID) expansion card.

11. A computer-readable non-transitory recording medium storing a computer program including at least one instruction configured to perform, by a processor, the operation method according to any one of claims 7 to 10 by using multiple storage devices.

## Patentansprüche

1. Speichersystem zur Simulation einer Quantenschaltung, umfassend:
mehrere Speichervorrichtungen, wobei die mehreren Speichervorrichtungen über eine Erweiterungskarte für ein redundantes Array unabhängiger Festplatten (RAID) mit einer Hostvorrichtung verbunden sind,
wobei das Speichersystem eingerichtet ist, dass in einer beliebigen der mehreren Speichervorrichtungen gespeicherte Daten für einen Hauptspeicher der Hostvorrichtung lesbar und aus dem Hauptspeicher in die Speichervorrichtungen als Reaktion auf eine Datenzugriffsanforderung schreibbar sind,
wobei:
jede der Speichervorrichtungen Wahrscheinlichkeitsamplitudendaten in Einheiten von Teilschaltungen speichert, die durch Partitionieren einer Quantenschaltung erhalten werden;
als Reaktion auf eine Datenleseanforderung für eine Operation in einem Hauptspeicher der Hostvorrichtung in einer ersten Speichervorrichtung unter den mehreren Speichervorrichtungen aufeinanderfolgend gespeicherte Wahrscheinlichkeitsamplitudendaten mit einem einzigen Zugriff auf die erste Speichervorrichtung in den Hauptspeicher gelesen werden; und
als Reaktion auf eine Datenschreibanforderung der Hostvorrichtung aufeinanderfolgend im Hauptspeicher gespeicherte Operationsergebnisdaten aufeinanderfolgend in eine zweite Speichervorrichtung unter den mehreren Speichervorrichtungen mit einem einzigen Zugriff auf die zweite Speichervorrichtung geschrieben werden;
wobei die Operationsergebnisdaten Ergebnisse umfassen, die durch die Hostvorrichtung durch Durchführen einer Quantenschaltungssimulation an den Wahrscheinlichkeitsamplitudendaten in Einheiten der Teilschaltungen erhalten werden; und
wobei, während die Hostvorrichtung eine erste Teilschaltung aus der einen oder den mehreren Teilschaltungen simuliert, Wahrscheinlichkeitsamplitudendaten für eine nächste Teilschaltung der ersten Teilschaltung in den Hauptspeicher geladen werden.

2. Speichersystem nach Anspruch 1, wobei
die mehreren Speichervorrichtungen Speichervorrichtungen eines Typs aus einem Festplattenlaufwerk (HDD), einem Solid-State-Laufwerk (SSD) und einem Nonvolatile Memory Express (NVMe) umfassen.

3. Speichersystem nach Anspruch 1, wobei
die mehreren Speichervorrichtungen Speichervorrichtungen eines oder mehrerer Typen aus einem Festplattenlaufwerk, einem Solid-State-Laufwerk und Nonvolatile Memory Express umfassen.

4. Speichersystem nach Anspruch 1, wobei
die mehreren Speichervorrichtungen ein Datenlayout jeder der Teilschaltungen als Reaktion auf eine Blockpermutationsoperation ändern, die von der Hostvorrichtung für jede der Teilschaltungen durchgeführt wird.

5. Speichersystem nach Anspruch 1, wobei
der Prozessor bewirkt, dass die mehreren Speichervorrichtungen über die Erweiterungskarte für das redundante Array unabhängiger Festplatten (RAID) mit einem anderen Speichersystem verbunden werden.

6. Speichersystem nach Anspruch 1, wobei
eine Bandbreite des Speichersystems entsprechend einer Anzahl von SAS3-Erweiterungskarten bestimmt wird, die mit den mehreren Speichervorrichtungen verbunden sind.

7. Betriebsverfahren unter Verwendung mehrerer Speichervorrichtungen, wobei das Betriebsverfahren umfasst:
Anfordern, durch eine Hostvorrichtung, eines Datenlesevorgangs von den Speichervorrichtungen für eine Operation in einem Hauptspeicher, wobei jede der Speichervorrichtungen Wahrscheinlichkeitsamplitudendaten in Einheiten von Teilschaltungen speichert, die durch Partitionieren einer Quantenschaltung erhalten werden,
Lesen von Wahrscheinlichkeitsamplitudendaten, die aufeinanderfolgend in einer ersten Speichervorrichtung unter den mehreren Speichervorrichtungen gespeichert sind, in den Hauptspeicher mit einem einzigen Zugriff auf die erste Speichervorrichtung;
Durchführen, durch die Hostvorrichtung, einer Quantenschaltungssimulation an den Wahrscheinlichkeitsamplitudendaten in Einheiten der Teilschaltungen und Ausgeben von Operationsergebnisdaten; und
Schreiben, durch die Hostvorrichtung, der aufeinanderfolgend im Hauptspeicher gespeicherten Operationsergebnisdaten aufeinanderfolgend in eine zweite Speichervorrichtung unter der Vielzahl von Speichervorrichtungen mit einem einzigen Zugriff auf die zweite Speichervorrichtung;
wobei, während die Hostvorrichtung eine erste Teilschaltung aus den einen oder mehreren Teilschaltungen simuliert, Wahrscheinlichkeitsamplitudendaten für eine nächste Teilschaltung der ersten Teilschaltung in den Hauptspeicher geladen werden;
wobei die mehreren Speichervorrichtungen über eine Erweiterungskarte für ein redundantes Array unabhängiger Festplatten (RAID) mit der Hostvorrichtung verbunden sind.

8. Betriebsverfahren nach Anspruch 7, wobei
die mehreren Speichervorrichtungen Speichervorrichtungen eines Typs aus einem Festplattenlaufwerk (HDD), einem Solid-State-Laufwerk (SSD) und einem Nonvolatile Memory Express (NVMe) umfassen.

9. Betriebsverfahren nach Anspruch 7, wobei
die mehreren Speichervorrichtungen Speichervorrichtungen eines oder mehrerer Typen aus einem Festplattenlaufwerk, einem Solid-State-Laufwerk und einem Nonvolatile Memory Express umfassen.

10. Betriebsverfahren nach Anspruch 7, wobei
die mehreren Speichervorrichtungen miteinander über die Erweiterungskarte für das redundante Array unabhängiger Festplatten (RAID) verbunden sind.

11. Computerlesbares nichttransitorisches Aufzeichnungsmedium, das ein Computerprogramm speichert, das mindestens eine Anweisung umfasst, die eingerichtet ist, durch einen Prozessor das Betriebsverfahren nach einem der Ansprüche 7 bis 10 unter Verwendung mehrerer Speichervorrichtungen durchzuführen.

## Revendications

1. Système de stockage pour simulation d'un circuit quantique, comprenant :
plusieurs dispositifs de stockage, dans lequel les plusieurs dispositifs de stockage sont connectés à un dispositif hôte par l'intermédiaire d'une carte d'extension pour une matrice redondante de disques indépendants (RAID),
le système de stockage étant configuré de sorte que des données stockées dans l'un quelconque des plusieurs dispositifs de stockage sont lisibles par une mémoire principale du dispositif hôte et inscriptibles depuis la mémoire principale dans les dispositifs de stockage en réponse à une demande d'accès aux données,
dans lequel :
chacun des dispositifs de stockage stocke des données d'amplitude de probabilité en unités de sous-circuits obtenus par partitionnement d'un circuit quantique ;
en réponse à une demande de lecture de données pour une opération dans une mémoire principale du dispositif hôte, des données d'amplitude de probabilité stockées consécutivement dans un premier dispositif de stockage parmi les plusieurs dispositifs de stockage sont lues dans la mémoire principale au moyen d'un accès unique au premier dispositif de stockage ; et
en réponse à une demande d'écriture de données du dispositif hôte, des données de résultat d'opération stockées consécutivement dans la mémoire principale sont écrites consécutivement dans un second dispositif de stockage parmi les plusieurs dispositifs de stockage au moyen d'un accès unique au second dispositif de stockage ;
dans lequel les données de résultat d'opération comprennent des résultats obtenus par la réalisation, par le dispositif hôte, d'une simulation de circuit quantique sur les données d'amplitude de probabilité en unités des sous-circuits ; et
dans lequel, pendant que le dispositif hôte simule un premier sous-circuit parmi un ou plusieurs sous-circuits, des données d'amplitude de probabilité destinées à un sous-circuit suivant du premier sous-circuit sont chargées dans la mémoire principale.

2. Système de stockage selon la revendication 1, dans lequel
les plusieurs dispositifs de stockage comprennent des dispositifs de stockage d'un type parmi un disque dur (HDD), un lecteur à état solide (SSD) et Nonvolatile Memory Express (NVMe).

3. Système de stockage selon la revendication 1, dans lequel
les plusieurs dispositifs de stockage comprennent des dispositifs de stockage d'un ou plusieurs types parmi un disque dur, un lecteur à état solide et Nonvolatile Memory Express.

4. Système de stockage selon la revendication 1, dans lequel
les plusieurs dispositifs de stockage modifient une disposition des données de chacun des sous-circuits en réponse à une opération de permutation de blocs qui est réalisée par le dispositif hôte pour chacun des sous-circuits.

5. Système de stockage selon la revendication 1, dans lequel
le processeur fait en sorte que les plusieurs dispositifs de stockage soient connectés à un autre système de stockage par l'intermédiaire de la carte d'extension pour la matrice redondante de disques indépendants (RAID).

6. Système de stockage selon la revendication 1, dans lequel
une largeur de bande du système de stockage est déterminée en fonction d'un nombre de cartes d'extension SAS3 connectées aux plusieurs dispositifs de stockage.

7. Procédé de fonctionnement utilisant plusieurs dispositifs de stockage, le procédé de fonctionnement comprenant les étapes consistant à :
demander, par un dispositif hôte, une lecture de données à partir des dispositifs de stockage pour une opération dans une mémoire principale, dans lequel chacun des dispositifs de stockage stocke des données d'amplitude de probabilité en unités de sous-circuits obtenus par partitionnement d'un circuit quantique,
lire des données d'amplitude de probabilité stockées consécutivement dans un premier dispositif de stockage parmi les plusieurs dispositifs de stockage dans la mémoire principale au moyen d'un accès unique au premier dispositif de stockage ;
réaliser, par le dispositif hôte, une simulation de circuit quantique sur les données d'amplitude de probabilité en unités des sous-circuits et produire des données de résultat d'opération ; et
écrire, par le dispositif hôte, les données de résultat d'opération stockées consécutivement dans la mémoire principale dans un second dispositif de stockage parmi la pluralité de dispositifs de stockage au moyen d'un accès unique au second dispositif de stockage ;
dans lequel, pendant que le dispositif hôte simule un premier sous-circuit parmi un ou plusieurs sous-circuits, des données d'amplitude de probabilité destinées à un sous-circuit suivant du premier sous-circuit sont chargées dans la mémoire principale ;
dans lequel les plusieurs dispositifs de stockage sont connectés au dispositif hôte par l'intermédiaire d'une carte d'extension pour une matrice redondante de disques indépendants (RAID).

8. Procédé de fonctionnement selon la revendication 7, dans lequel
les plusieurs dispositifs de stockage comprennent des dispositifs de stockage d'un type parmi un disque dur (HDD), un lecteur à état solide (SSD) et Nonvolatile Memory Express (NVMe).

9. Procédé de fonctionnement selon la revendication 7, dans lequel
les plusieurs dispositifs de stockage comprennent des dispositifs de stockage d'un ou plusieurs types parmi un disque dur, un lecteur à état solide et Nonvolatile Memory Express.

10. Procédé de fonctionnement selon la revendication 7, dans lequel
les plusieurs dispositifs de stockage sont connectés les uns aux autres par l'intermédiaire de la carte d'extension pour la matrice redondante de disques indépendants (RAID).

11. Support d'enregistrement non transitoire lisible par ordinateur stockant un programme d'ordinateur incluant au moins une instruction configurée pour faire réaliser, par un processeur, le procédé de fonctionnement selon l'une des revendications 7 à 10 au moyen de plusieurs dispositifs de stockage.
